# EUROPÄISCHE PATENTSCHRIFT

(11) **EP 0 806 332 B1**
(45) Veröffentlichungstag und Bekanntmachung des Hinweises auf die Patenterteilung: **28.11.2001**
(21) Anmeldenummer: 97106975.2
(22) Anmeldetag: 26.04.1997
(51) Int. Cl.: B60T 15/02

(54) **Ventilgehäuse und Zwischenwandung für ein Ventilgehäuse**
Valve casing and between wall for a valve casing
Boîte à soupape et entre-deux pour une boîte à soupape

(30) Priorität: 08.05.1996 DE 19618429
(43) Veröffentlichungstag der Anmeldung: 12.11.1997
(73) Patentinhaber: DEERE & COMPANY, Moline, Illinois 61265-8098 (US)
(72) Erfinder: Oberst, Karsten, 67065 Ludwigshafen (DE); Winkelmann, Harald, 64342 Seeheim-Jugenheim (DE)
(74) Vertreter: Magin, Ludwig Bernhard

(56) Entgegenhaltungen:
- DE-A- 2 419 010
- DE-A- 4 132 245

## Beschreibung

Die Erfindung betrifft das Ventilgehäuse für ein Fahrzeugbremsventil, vorzugsweise für ein zweistufiges Bremsventil und ein Zwischenwandung für ein solches Ventilgehäuse. Das Ventilgehäuse enthält eine Kammer, die einerseits als Ausgleichsreservoir dient, welches mit wenigstens einem in dem Ventilgehäuse ausgebildeten Bremszylinderbohrung mittelbar oder unmittelbar in Verbindung steht, und die andererseits als Notlenkvolumen eines hydrostatischen Lenkkreises dient, wobei wenigstens ein Rücklauf des hydrostatischen Lenkkreises in der Kammer mündet und in einem hochliegenden Bereich der Kammer eine Überlauföffnung vorgesehen ist, die über einen Kanal mit einem Vorratsbehälter für Hydraulikflüssigkeit verbunden ist. Die Erfindung betrifft ferner eine Zwischenwandung für ein derartiges Ventilgehäuse.

Die DE-A-41 32 245 beschreibt ein zweistufiges Bremsventil, welches zwei Querschnittsstufen aufweist, deren Wirkquerschnitte nacheinander wirksam werden, indem zunächst der größere Wirkquerschnitt zum Füllen der Bremszylinder verwendet wird und dann nach einer Übergangsphase ausschließlich der kleinere Wirkquerschnitt zum Aufbringen des erforderlichen Bremsdrucks eingesetzt wird. Die Druckräume des großen und des kleinen Wirkquerschnitts stehen über Ventilmittel mit einem Ausgleichsreservoir in Verbindung. Das Ausgleichsreservoir dient einerseits der Versorgung der Druckräume mit ausreichendem Bremsöl und der Aufnahme des beim Bremsen aus den Druckräumen verdrängten Bremsöls. Andererseits kann das Ausgleichsreservoir als Nachfüllreservoir für durch Leckagen verlorenes Bremsöl dienen. Das Bremsöl sollte möglichst frei von Luftblasen sein, um einen stabilen Druckpunkt der Bremse zu gewährleisten und eine Erhöhung des Bremsweges zu vermeiden.

Bei Ackerschleppern der 6000-er Serie der Fa. Deere & Company werden derartige Bremsventile verwendet. Hierbei ist das Bremsventil in das Hydrauliksystem des Fahrzeugs integriert, dem auch der hydraulische Lenkkreis angehört. Als Bremsöl wird die Hydraulikflüssigkeit des Hydrauliksystems verwendet. Eine Kammer des Bremsventils, die als Ausgleichsreservoir dient, steht mit dem Lenkkreis derart in Verbindung, daß die Kammer gleichzeitig als Notlenkvolumen für die hydraulische Lenkung genutzt werden kann. Solch ein Notlenkvolumen ist aus Sicherheitsgründen erforderlich, um bei einem Ausfall der Hydraulikpumpe das Nachsaugen von Hydraulikflüssigkeit für die manuelle Notbetätigung der Lenkzylinder zu ermöglichen und um gegebenenfalls Leckagen und Ungleichförmigkeiten der Lenkgeometrie auszugleichen.

Die Vereinigung des dem Bremsventil zugeordneten Ausgleichsreservoirs mit dem Notlenkvolumen in einer Kammer des Bremsventils hat Vorteile, denn es ist weder ein separater Behälter für das Notlenkvolumen noch ein gesondertes, spezielles Bremsöl erforderlich. Ferner findet ein Temperaturausgleich zwischen Lenk- und Bremskreis statt. Dies ist vorteilhaft, da die Flüssigkeit des Lenkkreises bei Betrieb des Fahrzeugs rasch ihre Arbeitstemperatur erreicht. Die Erwärmung des Lenkkreises teilt sich unmittelbar dem Bremskreis mit. Hierdurch kann insbesondere bei Inbetriebnahme eines kalten Fahrzeugs die Viskosität der Hydraulikflüssigkeit im Bereich des Bremsventils rasch abgesenkt werden, so daß eine zuverlässige Funktionsweise des Bremskreises gewährleistet ist.

Da die Hydraulikflüssigkeit im Lenkkreis ständig umgewälzt wird, kann die aus dem Lenkkreis in die gemeinsame Kammer für das Ausgleichsreservoir und das Notlenkvolumen eintretende Hydraulikflüssigkeit verschäumt, d. h. mit Luftblasen durchsetzt sein. Verschäumte Flüssigkeit kann sich jedoch, wie oben erwähnt wurde, nachteilig auf das Bremsverhalten auswirken.

Die der Erfindung zugrunde liegende Aufgabe wird darin gesehen, ein gattungsgemäßes Ventilgehäuse derart auszubilden, daß die eingangs genannten Probleme überwunden werden. Insbesondere soll vermieden werden, daß verschäumte Brems- oder Hydraulikflüssigkeit in den Bremskreis, insbesondere in die Bremszylinderbohrung des Bremsventils und die Bremszylinder gelangt.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Erfindungsgemäß wird die Kammer mittels eines Flüssigkeitsleitblechs oder einer Zwischenwandung in ein Ausgleichsreservoir und ein Notlenkvolumen unterteilt. Damit werden der Lenkkreis und der Bremskreis weitgehend voneinander getrennt. Jedoch stehen das Ausgleichsreservoir und das Notlenkvolumen, die beide in das Bremsventil integriert sind, über wenigstens eine Ausgleichsöffnung miteinander in Verbindung. Das Ausgleichsreservoir befindet sich tiefer oder unterhalb des Notlenkvolumens, so daß sich im Ausgleichsreservoir träge, luftfreie Hydraulikflüssigkeit sammeln kann, die nicht durch mit Luftblasen durchsetzte Flüssigkeitsströmungen im Notlenkvolumen gestört wird.

Die die Kammer unterteilende Zwischenwandung läßt sich relativ dünn ausbilden und erlaubt daher einen raschen Temperaturausgleich zwischen dem als Ausgleichsreservoir dienenden Bereich und dem als Notlenkvolumen dienenden Bereich der Kammer. Ferner ermöglicht die wenigstens eine Ausgleichsöffnung, die vorzugsweise als Durchtrittsöffnung in der Zwischenwand ausgebildet ist, einen Druckausgleich zwischen dem Ausgleichsreservoir und dem Notlenkvolumen sowie einen Flüssigkeitsaustausch bei Temperaturschwankungen (Temperaturausdehnungen) und Leckageverlusten im Bremskreis. Durch den automatischen Flüssigkeitsersatz ergibt sich ein wartungsfreies Bremssystem. Die Bemessung und die Wahl der Lage der Durchtrittsöffnung lassen sich ohne weiteres so treffen, daß ein Übertritt verschäumter Hydraulikflüssigkeit des Lenkungsrücklaufs, insbesondere ein Übertritt aus dem Notlenkvolumen in das Ausgleichsreservoir weitgehend vermieden wird.

Die Zwischenwandung besteht vorzugsweise aus einem Kunststofformteil konstanter Dicke. Der umlaufende Randbereich der Zwischenwandung ist im wesentlichen eben ausgebildet und kann zwischen Flanschflächen des Ventilgehäusegrundkörpers und eines Deckels eingespannt sein. Der durch den Randbereich eingeschlossene mittlere Bereich der Zwischenwandung enthält gemäß einer bevorzugten Ausgestaltung der Erfindung wenigstens eine sich nach unten ausbeulende wannenförmige Ausbuchtung, die sich wenigstens teilweise in die Kammer des Ventilgehäuses erstreckt und diese in ein Ausgleichsreservoir und ein Notlenkvolumen unterteilt.

Für eine strömungsgünstige Ausbildung der Zwischenwandung weist diese einen asymmetrischen Querschnitt auf, wobei von einer Randseite der Zwischenwandung aus die Ausbuchtung relativ steil abfällt und auf der gegenüberliegenden Randseite relativ flach in den Randbereich übergeht. Der Querschnitt ist vorzugsweise einem Flügelprofil ähnlich. Auf der Seite der steilen Flanke taucht in die Ausbuchtung ein an dem Deckel angeformter rohrförmiger Stutzen ein an dessen unterem Ende die Rücklauföffnung des hydrostatischen Lenkkreises mündet. In dem hierzu entfernt liegenden, ebenen und vorzugsweise höher liegenden Randbereich, der sich an den flach auslaufenden Bereich der Ausbuchtung anschließt, befindet sich in der Zwischenwandung eine Durchtrittsöffnung, die mit der mit dem Vorratsbehälter in Verbindung stehenden Überlauföffnung fluchtet. Durch die flügelprofilähnliche Ausbildung der Zwischenwandung wird die Hydraulikflüssigkeit des Lenkkreises von der Rücklauföffnung zur Überlauföffnung auf einem relativ großen Kreisbogen geführt, wodurch Verwirbelungen vermieden werden. Ein unerwünschter Staudruck an der Überlaufbohrung kann durch einen ausreichend groß bemessenen Querschnitt des zum Vorratsbehälter führenden Kanals vermieden werden.

Gemäß einer bevorzugten Weiterbildung der Erfindung ist bei einem Ventilgehäuse mit einem Gehäusegrundkörper, in den eine nach außen offene, durch einen Deckel verschließbare Kammer eingelassen ist, ein umlaufender, im wesentlichen ebener Randbereich der wannenförmig ausgebildeten Zwischenwandung zwischen den Flanschflächen des Gehäusegrundkörpers und des Deckels eingespannt.

Zur Abdichtung des Ventilgehäuses kann der Randbereich der Zwischenwandung gegenüber der Flanschfläche des Gehäusegrundkörpers und/oder der Flanschfläche des Deckels durch wenigstens einen umlaufenden Dichtring (O-Ring) abgedichtet werden. Die Dichtringe können von umlaufenden Nuten in dem Gehäusegrundkörper, dem Deckel und/oder der Zwischenwandung aufgenommen werden.

Um bei einem montierten Ventilgehäuse feststellen zu können, ob die Zwischenwandung eingebaut oder womöglich deren Einbau vergessen wurde, ist es von Vorteil, wenn das Ventilgehäuse und der Randbereich der Zwischenwandung so ausgelegt sind, daß der Randbereich bei zusammengebautem Ventilgehäuse wenigstens bereichsweise von außen sichtbar ist.

Es ist vorteilhaft, wenn die Rücklauföffnung des hydrostatischen Lenkkreises in die Hydraulikflüssigkeit im Notlenkvolumen eintaucht, um im Notlenkbetrieb aus dem Notlenkvolumen Hydraulikflüssigkeit ansaugen zu können. Zu diesem Zweck ist an dem Deckel ein in den unteren Bereich der Ausbuchtung der Zwischenwandung ragender Stutzen angeformt. An dem unteren Ende des Stutzens mündet der Rücklauf des hydraulischen Lenkkreises.

Ferner kann in den Deckel wenigstens eine Ausnehmung oder Ausbuchtung vorgesehen sein, die oberhalb der Ausgleichsöffnungen und/oder der Durchtrittsöffnung liegt und den Durchtritt von Hydraulikflüssigkeit aus dem Notlenkvolumen in die Überlauföffnung und/oder die Ausgleichsöffnung erleichtert.

Gemäß einer weiteren, durch den Patentanspruch 13 beanspruchten erfindungsgemäßen Lösung wird eine Zwischenwandung für ein Ventilgehäuse der oben genannten Art vorgeschlagen.

Eine derartige Zwischenwandung läßt sich vorteilhaft bei bekannten Ventilkörpern der eingangs genannten Art nachträglich einsetzen, um auch hier die genannten Vorteile zu erzielen.

Die Zwischenwandung kann als metallische Platte ausgebildet sein, die eine gute Wärmeleitung für den Wärmeaustausch aufweist. Es ist jedoch von besonderem Vorteil die Zwischenwandung in preiswerter Weise aus relativ leichtem, den Festigkeitsanforderungen genügenden und den Umgebungseinflüssen standhaltenden Kunststoff, beispielsweise PA6-30%GF, im Spritzguß herzustellen.

Weitere Vorteile für eine Zwischenwandung ergeben sich aus den weiteren Unteransprüchen.

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
- Fig. 1: die schematische und vereinfachte Darstellung eines hydraulischen Brems- und Lenkkreises,
- Fig. 2: einen ersten Querschnitt durch ein erfindungsgemäßes Ventilgehäuse ohne Deckel,
- Fig. 3: einen zweiten Querschnitt durch ein erfindungsgemäßes Ventilgehäuse mit Deckel und
- Fig. 4: eine Aufsicht des Ventilgehäuses ohne Deckel gemäß Fig. 2.

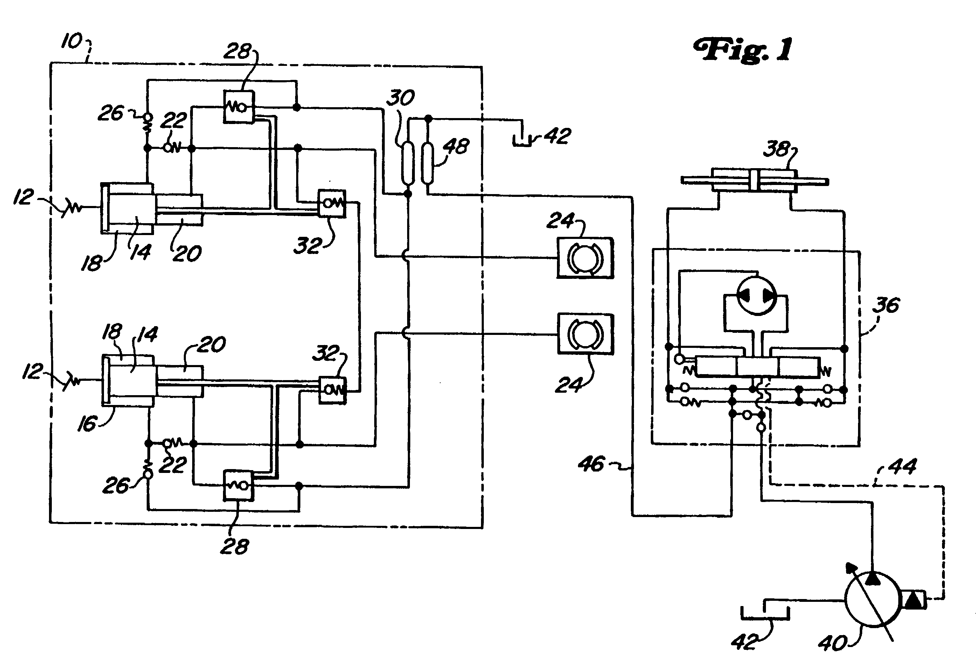

Aus Fig. 1 geht die vereinfachte Darstellung eines hydraulischen Brems- und Lenkkreises hervor, wie er im wesentlichen bei John Deere Schleppern der 6000-er Serie verwendet wird. Auf der linken Seite der Fig. 1 ist der Bremskreis 10 dargestellt, bei dem ein linkes und ein rechtes Bremspedal 12 je auf den Stufenkolben 14 eines zugehörigen zweistufigen Bremsventils einwirken. Bei Betätigung eines Bremspedals 12 wird der zugehörige Stufenkolben 14 innerhalb seiner Bremszylinderbohrung 16 verschoben. Die Bremszylinderbohrung 16 ist ebenfalls stufig ausgebildet und weist einen Abschnitt großen Durchmessers und einen Abschnitt kleinen Durchmessers auf, so daß sich eine Füllstufe 18 und eine Druckstufe 20 ausbilden. Die Füllstufe 18 steht über ein Rückschlagventil 22 und die Druckstufe 20 steht unmittelbar mit dem zugehörigen Bremszylinder 24 in Verbindung. Das Rückschlagventil 22 steuert die Umschaltung zwischen der Füll- und Druckstufe. Ferner steht die Füllstufe 18 über ein Nachsaugventil 26 und die Druckstufe 20 über ein Kipp- oder Einlaßventil 28 mit einem Ausgleichsreservoir 30 in Verbindung. An die Druckstufe 20 ist ferner ein Druckausgleichsventil 32 angeschlossen, das mit einem entsprechenden Druckausgleichsventil 32 des anderen Bremsventils in Verbindung steht und dem Druckausgleich zwischen der linken und rechten Bremse dient, sofern beide Bremspedale 12 betätigt werden. Bei Betätigung nur eines Bremspedals 12 (Lenkbremsen) findet ein Druckausgleich zwischen linker und rechter Bremse nicht statt. Das Kippventil 28 und das Druckausgleichsventil 32 lassen sich mechanisch durch den Stufenkolben 14 steuern, was durch Doppellinien in Fig. 1 angedeutet ist. Einzelheiten eines derartigen Bremskreises 10 sind in der DE-A-41 32 245 näher erläutert, so daß an dieser Stelle von einer weiteren Beschreibung abgesehen werden kann.

Auf der rechten Seite der Fig. 1 ist ein hydraulisches Lenkventil 36, in das eine Reihe von Ventilen integriert ist, angedeutet. Das Lenkventil 36 dient der Steuerung eines Lenkzylinders 38. Derartige Lenkventile 36 sind bekannt, so daß es an dieser Stelle nicht näher beschrieben wird. Das Lenkventil 36 wird durch eine Hydraulikpumpe 40, die Hydraulikflüssigkeit aus einem Vorratsbehälter 42 fördert, gespeist. Die Hydraulikpumpe 40 wird über eine Steuerleitung 44 von dem Lenkventil 36 gesteuert. Das Lenkventil 36 steht über eine Rücklaufleitung 46 mit einem Notlenkvolumen 48 in Verbindung. Gemäß dem Stand der Technik sind das Ausgleichsreservoir 30 und das Notlenkvolumen 48 in einer einzigen im Bremsventil 10 ausgebildeten, mit einem Vorratsbehälter 42 verbundenen Kammer 50 zusammengefaßt. Erfindungsgemäß sind das Ausgleichsreservoir 30 und das Notlenkvolumen 48 durch eine Zwischenwand 52 getrennt, was noch ausführlich beschrieben wird.

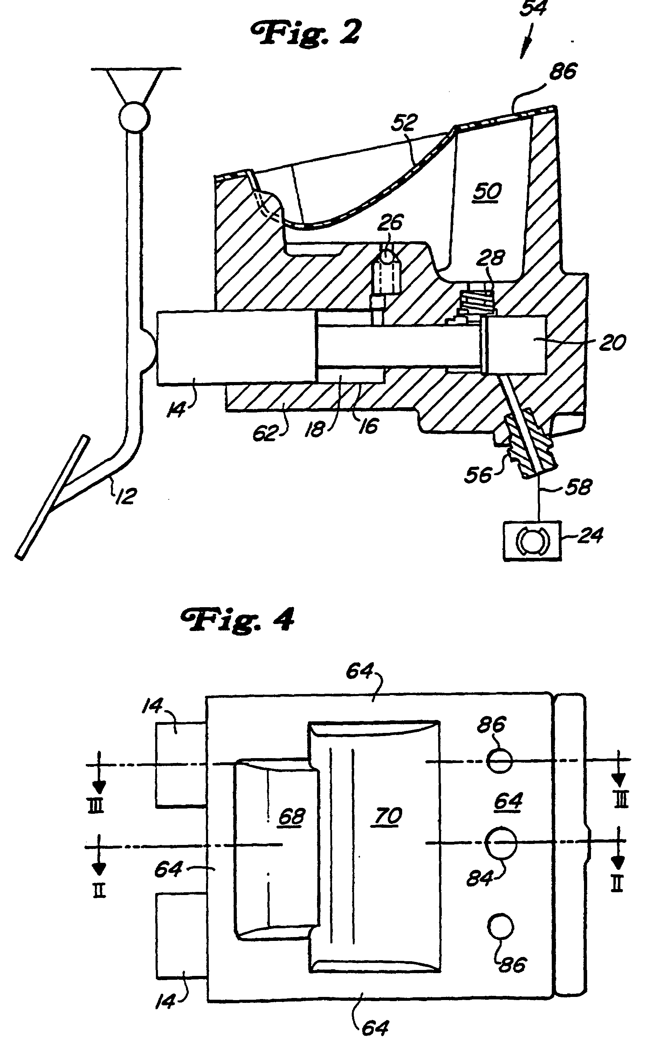

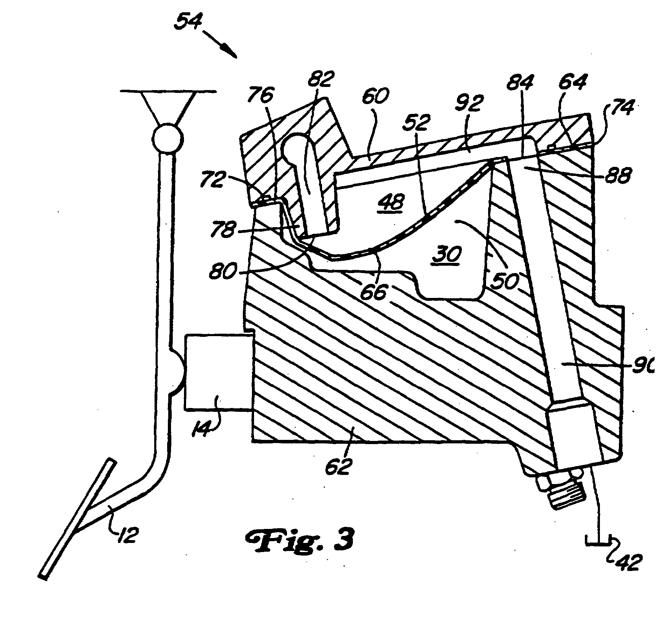

Aus Fig. 2 geht ein Schnitt durch ein Bremsventilgehäuse 54 hervor. Der Schnitt verläuft hinsichtlich der Fig. 4 entlang der Linie II - II. Es sind ein Bremspedal 12, ein Stufenkolben 14, der in einer Stufenbohrung 16 axial verschiebbar geführt ist, ein Nachsaugventil 26, ein Kippventil 28 und ein Anschlußnippel 56, welcher die Druckstufe 20 über eine Bremsleitung 58 mit einem Bremszylinder 24 verbindet, erkennbar. Das Nachsaugventil 26 verbindet die Füllstufe 18 und das Kippventil 28 verbindet die Druckstufe 20 mit einer Kammer 50, die im Ventilgehäuse 54 eingelassen und nach oben offen ist. Die Kammer 50 ist durch einen Deckel 60 verschließbar, der in Fig. 2 nicht gezeigt ist. Zwischen dem Ventilgehäuse 54 und dem Deckel 60 ist eine Zwischenwandung 52 eingespannt, die anhand der Fig. 3 näher erläutert wird.

Fig. 3 stellt einen weiteren Schnitt durch das Bremsventilgehäuse 54 dar, der hinsichtlich Fig. 4 entlang der Linie III - III verläuft. Wie deutlich zu erkennen ist, wird die in den Gehäusegrundkörper 62 eingelassene Kammer 50, die durch einen Deckel 60 verschlossen ist, durch eine Zwischenwandung 52 in zwei Teilräume unterteilt. Bei den Teilräumen handelt es sich um das Ausgleichsreservoir 30 und das Notlenkvolumen 48.

Die Querschnittsform der Zwischenwandung 52 geht aus den Fig. 2 und 3 hervorgeht. Die Aufsicht wird durch Fig. 4, in der der Deckel 60 nicht mitgezeichnet wurde, gezeigt.

Die Zwischenwandung 52 besteht aus einem Kunststoffbauteil mit im wesentlichen konstanter Wandstärke. Sie enthält einen im wesentlichen ebenen, umlaufenden Randbereich 64, der eine wannenförmige Ausbuchtung 66 einschließt. Wie aus Fig. 4 hervorgeht, enthält die Ausbuchtung 66 zwei Abschnitte 68, 70 unterschiedlicher Breite, was seinen Grund lediglich in der konkreten Konstruktion des Ventilgehäuses hat und sich nicht grundsätzlich auf die Funktion der Zwischenwandung 52 auswirkt.

Der Randbereich 64 der Zwischenwandung 52 liegt auf einer ebenen, gegenüber der Horizontalen geneigten Flanschfläche des Gehäusegrundkörpers 62 auf. er wird durch eine Flanschfläche des Deckels 60, der mittels nicht gezeigter Schrauben auf dem Gehäusegrundkörper 62 befestigbar ist, abgedeckt. Um die Zwischenwandung 52 gegenüber dem Gehäusegrundkörper 62 abzudichten, weist die Zwischenwandung 52 in ihrem Randbereich 64 eine nach unten offene, umlaufende, nicht dargestellte Nut auf, in die ein nicht dargestellter Dichtring eingelegt ist. Zur Abdichtung des Deckels 60 gegenüber der Zwischenwandung 52 ist auf der Unterseite des Deckels 60 eine umlaufende Nut 72 eingelassen, in die ein Dichtring eingelegt ist. Die umlaufende Stirnfläche des Randbereichs 64 der Zwischenwandung ist bei zusammengebautem Ventilgehäuse 54 (zum Beispiel an der Stelle 74) von außen sichtbar.

Der Querschnitt der Zwischenwandung 52 und insbesondere deren Ausbuchtung 66 sind asymmetrisch ausgebildet. Von der tiefer liegenden Randseite 76 (links, hinsichtlich Fig. 2 oder 3) aus fällt die Zwischenwandung 52 steil ab, während sie auf ihrer gegenüberliegenden etwas höheren Randseite über einen Kreisbogen relativ flach in den Randbereich 64 übergeht. Der Querschnitt der Ausbuchtung 66 gleicht im wesentlichen einem Flügelprofil.

In den steilabfallenden Bereich der Ausbuchtung 66 taucht ein an dem Deckel 60 angeformter rohrförmiger Stutzen 78 in die tiefste Stelle der Ausbuchtung 66 der Zwischenwandung 52 ein. Der Stutzen 78 weist an seinem unteren Ende eine Rücklauföffnung 80 auf, die über einen im Deckel 60 integrierten Rücklaufkanal 82 mit der Rücklaufleitung 46 des Lenkventils 36 in Verbindung steht. Da sich in der Ausbuchtung (Notlenkvolumen) Hydraulikflüssigkeit sammelt und die Ausbuchtung daher immer wenigstens teilweise mit Hydraulikflüssigkeit gefüllt ist, taucht die Rücklauföffnung 80 in Hydraulikflüssigkeit ein. Hierdurch wird gewährleistet, daß bei Ausfall der Hydraulikpumpe 40 und bei manueller Betätigung des Lenkzylinders 38 Hydraulikflüssigkeit über die Rücklaufleitung 46, den Rücklaufkanal 82 und die Rücklauföffnung 80 aus dem Notlenkvolumen 48 in das Lenkventil 36 nachgesaugt wird.

Im höher liegenden (rechts, hinsichtlich der Fig. 2 und 3) ebenen Randbereich 64 der Zwischenwandung 52 befindet sich eine mittlere Durchtrittsöffnung 84 und je eine rechts und links daneben liegende Ausgleichsöffnung 86. Alle drei Öffnungen 84, 86 fluchten miteinander. Die Öffnungen 84, 86 liegen so hoch, daß sie als Überlauföffnungen wirken. Die Durchtrittsöffnung 84 liegt über einer Überlauföffnung 88 im Gehäusegrundkörper 62, welche über einen Kanal 90 mit dem Vorratsbehälter 42 verbunden ist. Steigt der Flüssigkeitsspiegel in dem Notlenkvolumen 48 an, so kann die Hydraulikflüssigkeit über die Durchtrittsöffnung 84, die Überlauföffnung 88 und den Kanal 90 in den Vorratsbehälter 42 abfließen. Über die beiden Ausgleichsöffnungen 86 kann Hydraulikflüssigkeit von dem Notlenkvolumen 48 in das Ausgleichsreservoir 30 des Bremsventils übertreten, so daß das Ausgleichsreservoir 30 immer automatisch nachgefüllt wird, falls ein Flüssigkeitsverlust eintreten sollte. Die Ausgleichsöffnungen 86 werden so bemessen, daß es zu keinem merklichen Druckaufbau im Ausgleichsreservoir 30 des Bremskreises kommt. Um die Durchtrittsöffnung 84 und die Ausgleichsöffnungen 86 nicht durch den Deckel 60 zu verschließen, weist der Deckel 60 auf seiner Unterseite wenigstens eine Ausnehmung 92 auf, die über den Öffnungen 84, 86 liegt.

Beim Betrieb tritt ständig mit Luft durchmischte Hydraulikflüssigkeit aus der Rücklauföffnung 80 in das Notlenkvolumen 48 ein. Diese bewegt sich entlang der strömungsgünstig ausgebildeten Zwischenwandung 52 zu der Durchtrittsöffnung 84 und fließt über den Kanal 90 in den Vorratsbehälter 42 ab. Die Hydraulikflüssigkeit fließt auch über die Ausgleichsöffnungen 86. Falls das Ausgleichsreservoir 30 nicht vollständig gefüllt ist, erfolgt ein Nachfüllen. Da im Ausgleichsreservoir 30 keine nenneswerte Flüssigkeitsströmung herrscht, kann sich hier die Hydraulikflüssigkeit absetzen und beruhigen, wobei etwa noch enthaltene Luftblasen nach oben durch die Ausgleichsöffnungen 86 entweichen.

Auch wenn die Erfindung lediglich anhand eines Ausführungsbeispiels beschrieben wurde, erschließen sich für den Fachmann im Lichte der vorstehenden Beschreibung sowie der Zeichnung viele verschiedenartige Alternativen, Modifikationen und Varianten, die unter die vorliegende Erfindung fallen.

## Patentansprüche

1. Ventilgehäuse für ein Fahrzeugbremsventil mit einer Kammer (50), die einerseits als Ausgleichsreservoir dient, welches mit wenigstens einer in dem Ventilgehäuse (54) ausgebildeten Bremszylinderbohrung (16) mittelbar oder unmittelbar in Verbindung steht, und die andererseits als Notlenkvolumen eines hydrostatischen Lenkkreises (36) dient, wobei wenigstens ein Rücklauf (46) des hydrostatischen Lenkkreises (36) in der Kammer (50) mündet und in einem hochliegenden Bereich der Kammer (50) eine Überlauföffnung (88) vorgesehen ist, die über einen Kanal (90) mit einem Vorratsbehälter (42) für Hydraulikflüssigkeit verbindbar ist, **dadurch gekennzeichnet, daß** eine Zwischenwandung (52) vorgesehen ist, die die Kammer (50) in ein Ausgleichsreservoir (30) und ein Notlenkvolumen (48) unterteilt, und daß das Ausgleichsreservoir (30) und das Notlenkvolumen (48) über wenigstens eine Ausgleichsöffnung (86) miteinander in Verbindung stehen.

2. Ventilgehäuse nach Anspruch 1, **dadurch gekennzeichnet, daß** die Ausgleichsöffnung (86) eine in der Zwischenwandung (52) ausgebildete Durchtrittsöffnung ist.

3. Ventilgehäuse nach Anspruch 1 oder 2, **dadurch gekennzeichnet, daß** der Randbereich (64) der eine im wesentlichen konstante Wandstärke aufweisenden Zwischenwandung (52) im wesentlichen eben ausgebildet ist und daß der mittlere Bereich der Zwischenwandung (52) wenigstens eine wannenförmige Ausbuchtung (66) aufweist, die sich in die Kammer (50) erstreckt und diese unterteilt.

4. Ventilgehäuse nach Anspruch 3, **dadurch gekennzeichnet, daß** die Zwischenwandung (52) im Querschnitt asymmetrisch ausgebildet ist, derart, daß von einer Randseite (76) der Zwischenwandung (52) aus die Ausbuchtung (66) relativ steil abfällt und auf der gegenüberliegenden Randseite relativ flach in den Randbereich (64) übergeht.

5. Ventilgehäuse nach einem der Ansprüche 1 bis 4, **dadurch gekennzeichnet, daß** in einem hochliegenden Bereich des umlaufenden Randbereichs (64) der Zwischenwandung (52) eine Durchtrittsöffnung (84) vorgesehen ist, die mit der mit dem Vorratsbehälter (42) in Verbindung stehenden Überlauföffnung (88) korrespondiert.

6. Ventilgehäuse nach einem der Ansprüche 1 bis 5, **dadurch gekennzeichnet, daß** die Ausgleichsöffnung (86) in einem hochliegenden Bereich der Zwischenwandung (52), entfernt von der Rücklauföffnung (80) des Lenksystems liegt.

7. Ventilgehäuse nach einem der Ansprüche 1 bis 6, **dadurch gekennzeichnet, daß** sich die Ausgleichsöffnung (86) in einem ebenen, hochliegenden Randbereich (64) der Zwischenwandung (52) befindet.

8. Ventilgehäuse mit einem Gehäusegrundkörper (62), in den eine nach außen offene, durch einen Deckel (60) verschließbare Kammer (50) eingelassen ist, nach einem der Ansprüche 1 bis 7, **gekennzeichnet durch** eine wannenförmig ausgebildete Zwischenwandung (52), deren umlaufender, im wesentlichen ebener Randbereich (64) zwischen Flanschflächen des Gehäusegrundkörpers (62) und des Deckels (60) eingespannt ist.

9. Ventilgehäuse nach Anspruch 8, **dadurch gekennzeichnet, daß** der Randbereich (64) der Zwischenwandung (52) bei zusammengebautem Ventilgehäuse (54) wenigstens bereichsweise von außen sichtbar ist.

10. Ventilgehäuse nach Anspruch 8 oder 9, **dadurch gekennzeichnet, daß** der Randbereich (64) der Zwischenwandung (52) gegenüber der Flanschfläche des Gehäusegrundkörpers (62) und/oder der Flanschfläche des Deckels (60) durch wenigstens einen umlaufenden Dichtring abgedichtet ist.

11. Ventilgehäuse nach einem der Ansprüche 8 bis 10, **dadurch gekennzeichnet, daß** an dem Deckel (60) ein in den unteren Bereich der Ausbuchtung (66) der Zwischenwandung (52) ragender Stutzen (78) angeformt ist, an dessen unterem Ende der Rücklauf (82) des hydraulischen Lenkkreises (36) mündet.

12. Ventilgehäuse nach einem der Ansprüche 8 bis 11, **dadurch gekennzeichnet, daß** der Deckel (60) oberhalb der Ausgleichsöffnungen (86) und/oder der Durchtrittsöffnung (84) wenigstens eine Ausnehmung (92) aufweist.

13. Zwischenwandung für ein Ventilgehäuse für ein Fahrzeugbremsventil mit einer Kammer (50), die einerseits als Ausgleichsreservoir dient, welches mit wenigstens einer in dem Ventilgehäuse (54) ausgebildeten Bremszylinderbohrung (16) mittelbar oder unmittelbar in Verbindung steht, und die andererseits als Notlenkvolumen eines hydrostatischen Lenkkreises (36) dient, wobei wenigstens ein Rücklauf (46) des hydrostatischen Lenkkreises (36) in der Kammer (50) mündet und in einem hochliegenden Bereich der Kammer (50) eine Überlauföffnung (88) vorgesehen ist, die über einen Kanal (90) mit einem Vorratsbehälter (42) für Hydraulikflüssigkeit verbindbar ist,
**gekennzeichnet durch** eine im wesentlichen gleichförmige Wandstärke und **durch** eine umlaufende, ebene Randfläche (64), die wenigstens eine wannenförmige Ausbuchtung (66) im mittleren Bereich der Zwischenwandung (52) begrenzt wobei in die Zwischenwandung wenigstens eine Durchtrittsöffnung (84) und/oder wenigstens eine Ausgleichsöffnung (86) vorgesehen ist, wobei die Kammer (50) **durch** die Zwischenwandung in ein Ausgleichsreservoir (30) und ein Notlenkvolumen (48) unterteilt wird, und das Ausgleichsreservoir (30) und das Notlenkvolumen (48) somit miteinander in Verbindung stehen.

14. Zwischenwandung nach Anspruch 13, **gekennzeichnet durch** eine im Querschnitt asymmetrische Ausbildung, derart, daß von einer Randseite (76) der Zwischenwandung (52) aus die Ausbuchtung (66) relativ steil abfällt und auf der gegenüberliegenden Randseite relativ flach in den Randbereich (64) übergeht.

15. Zwischenwandung nach Anspruch 14, **dadurch gekennzeichnet, daß** die Durchtrittsöffnung und/oder Ausgleichsöffnung im Randbereich (64), der auf der flach auslaufenden Seite der Ausbuchtung (66) liegt.

16. Zwischenwandung nach einem der Ansprüche 13 bis 15, **dadurch gekennzeichnet, daß** sie aus Kunststoff im Spritzgußverfahren hergestellt ist.

## Claims

1. A valve housing for a vehicle brake valve, with a chamber (50) which serves on the one hand as a equalising reservoir which is in communication directly or indirectly with at least one brake cylinder bore (16) formed in the valve housing (54), and which serves on the other hand as an emergency steering volume of a hydrostatic steering circuit (36), wherein at least one return line (46) of the hydrostatic steering circuit (36) opens into the chamber (50) and an overflow opening (88) is provided in a high region of the chamber (50) and can be connected through a channel (90) to a reservoir (42) for hydraulic fluid, **characterized in that** an intermediate wall (52) is provided, dividing the chamber (50) into a equalising reservoir (30) and an emergency steering volume (48), and **in that** the equalising reservoir (30) and the emergency steering volume (48) are in communication via at least one equalising opening (86).

2. A valve housing according to claim 1, **characterized in that** the equalising opening (86) is a through opening formed in the intermediate wall (52).

3. A valve housing according to claim 1 or 2, **characterized in that** the edge region (64) of an intermediate wall (52) having a substantially constant wall thickness is of substantially plane form and **in that** the middle region of the intermediate wall (52) has at least one bulge (66) of pan form which extends into the chamber (50) and subdivides this.

4. A valve housing according to claim 3, **characterized in that** the intermediate wall (52) is of asymmetric form in cross-section, such that the bulge (66) falls off relatively steeply from one edge side (76) of the intermediate wall (52) and passes into the edge region (64) on the opposite edge side relatively flat.

5. A valve housing according to any of claims 1 to 4, **characterized in that** a through opening (84) is provided in a high region of the surrounding edge region (64) of the intermediate wall (52) and corresponds with the overflow opening (88) in communication with the reservoir (42).

6. A valve housing according to any of claims 1 to 5, **characterized in that** the equalising opening (86) lies in a high region of the intermediate wall (52), remote from the return opening (80) of the steering system.

7. A valve housing according to any of claims I to 6, **characterized in that** the equalising opening (86) is located in a plane, high edge region (64) of the intermediate wall (52).

8. A valve housing with a housing body (62), into which a chamber (50) is recessed, open to outside and closable by a cover (60), according to any of claims 1 to 7, **characterized by** an intermediate wall (52) of pan form, whose surrounding, substantially plane edge region (64) is clamped between flange surfaces of the housing body (62) and the cover (60).

9. A valve housing according to claim 8, **characterized in that** the edge region (64) of the intermediate wall (52) is at least locally visible from the outside with the valve housing (54) assembled.

10. A valve housing according to claim 8 or 9, **characterized in that** the edge region (64) of the intermediate wall (52) is sealed by at least one surrounding sealing ring relative to the flange surface of the housing body (62) and/or the flange surface of the cover (60).

11. A valve housing according to any of claims 8 to 10, **characterized in that** a pipe end (78) projecting on the lower region of the bulge (66) of the intermediate wall (52) is moulded on to the cover (60), the return line (82) of the hydraulic steering circuit (36) opening into the lower end of the spigot.

12. A valve housing according to any of claims 8 to 11, **characterized in that** the cover (60) has at least one recess (92) above the equalising opening (86) and/or the through opening (84).

13. An intermediate wall for a valve housing for a vehicle brake valve, with a chamber (50) which serves on the one hand as a equalising reservoir which is in communication directly or indirectly with at least one brake cylinder bore (16) formed in the valve housing (54), and which serves on the other hand as an emergency steering volume of a hydrostatic steering circuit (36), wherein at least one return line (46) of the hydrostatic steering circuit (36) opens into the chamber (50) and an overflow opening (88) is provided in a high region of the chamber (50) and can be connected through a channel (90) to a reservoir (42) for hydraulic fluid, **characterized by** a substantially uniform wall thickness and by a surrounding, plane edge surface (64), which bounds at least one bulge (66) of pan form in the middle region of the intermediate wall (52), wherein at least one through opening (84) and/or at least one equalising opening (86) is provided in the intermediate wall, whereby the chamber (50) is divided by the intermediate wall into an equalising reservoir (30) and an emergency steering volume (48) and the equalising reservoir (30) and the emergency volume (48) are thus in communication with one another.

14. An intermediate wall according to claim 13, **characterized by** a shape which is asymmetrical in cross-section, such that the bulge (66) falls off relatively steeply from one edge side (76) of the intermediate wall (52) and passes into the edge region (64) on the opposite edge side relatively flat.

15. An intermediate wall according to claim 14, **characterized in that** the through opening and/or the equalising opening (86) lies in the edge region (64) on the side of the bulge (66) running out flat.

16. An intermediate wall according to any of claims 13 to 15, **characterized in that** it is made from plastics material by an injection moulding method.

## Revendications

1. Boîtier de soupape pour une soupape de frein de véhicule comportant une chambre (50), qui d'une part est utilisé comme réservoir de compensation, qui est relié directement ou indirectement à au moins un alésage de cylindre de frein (16) formé dans le boîtier de soupape (54), et qui d'autre part sert de volume de braquage d'urgence d'un circuit de direction hydrostatique (36), et dans lequel au moins un circuit de retour (46) du circuit de direction hydrostatique (36) débouche dans la chambre (50) tandis que dans une zone élevée de la chambre (50) est prévue une ouverture de trop-plein (88), qui peut être reliée au moyen d'un canal (90) à un réservoir (42) pour liquide hydraulique, **caractérisé en ce qu'**il est prévu une paroi intercalaire (52), qui subdivise la chambre (50) en un réservoir de compensation (30) et un volume de braquage d'urgence, et que le réservoir de compensation (30) et le volume de braquage d'urgence (48) sont reliés entre eux par l'intermédiaire d'au moins une ouverture de compensation (86).

2. Boîtier de soupape selon la revendication 1, **caractérisé en ce que** l'ouverture de compensation (86) est une ouverture de passage formée dans la paroi intercalaire (52).

3. Boîtier de soupape selon la revendication 1 ou 2, **caractérisé en ce que** la partie marginale (64) d'une paroi intercalaire (52), qui possède une épaisseur de paroi essentiellement constante, est agencée avec une forme essentiellement plane et que la partie médiane de la paroi intercalaire (52) possède au moins un renfoncement (66) en forme de cuvette, qui s'étend dans la chambre (120) et divise cette dernière.

4. Boîtier de soupape selon la revendication 3, **caractérisé en ce que** la paroi intercalaire (52) est agencée avec une forme dissymétrique en coupe transversale de telle sorte que l'évidement (66) descend selon une disposition relativement pentue à partir d'un côté marginal (76) de la paroi intercalaire (52) et se prolonge sur le côté marginal opposé avec une forme relativement plane par la partie marginale (64).

5. Boîtier de soupape selon l'une des revendications 1 à 4, **caractérisé en ce que** dans la zone élevée de la partie marginale circonférentielle (64) de la paroi intercalaire (52) est prévue une ouverture de passage (84), qui correspond à l'ouverture de trop-plein (88) qui est reliée au réservoir (42).

6. Boîtier de soupape selon l'une des revendications 1 à 5, **caractérisé en ce que** l'ouverture de compensation (86) est située dans une zone élevée de la paroi intercalaire (52) en étant éloignée de l'ouverture de retour (80) du système de direction.

7. Boîtier de soupape selon l'une des revendications 1 à 6, **caractérisé en ce que** l'ouverture de compensation (86) est située dans une partie marginale élevée plane (64) de la paroi intercalaire (52).

8. Boîtier de soupape comportant un corps de base de boîtier (62), dans lequel est amenée une chambre (50) ouverte vers l'extérieur et qui peut être fermée par un couvercle (60), selon l'une des revendications 1 à 7, **caractérisé par** une paroi intercalaire (52) en forme de cuvette, dont la partie marginale circonférentielle essentiellement plane (64) est serrée entre des surfaces de bride du corps de base (62) du boîtier et du couvercle (60).

9. Boîtier de soupape selon la revendication 8, **caractérisé en ce que** la partie marginale (64) de la paroi intercalaire (52) est visible au moins par endroits de l'extérieur lorsque le boîtier de soupape (54) est assemblé.

10. Boîtier de soupape selon la revendication 8 ou 9, **caractérisé en ce que** la partie marginale (64) de la paroi intercalaire (52) est fermée de façon étanche par rapport à la surface de bride du corps de base (62) du boîtier et/ou par rapport à la surface de bride du couvercle (60) par au moins une bague d'étanchéité périphérique.

11. Boîtier de soupape selon l'une des revendications 8 à 10, **caractérisé en ce que** sur le couvercle (60) est formé un embout (78), qui pénètre dans la partie inférieure de l'évidement (66) de la paroi intercalaire (52) et dans l'extrémité inférieure duquel débouche le retour (82) du circuit de direction hydraulique (36).

12. Boîtier de soupape selon l'une des revendications 8 à 11, **caractérisé en ce que** le couvercle (60) possède, au-dessus des ouvertures de compensation (86) et/ou de l'ouverture de passage (84), au moins un évidement (92).

13. Paroi intercalaire pour un boîtier de soupape pour une soupape de frein de véhicule comportant une chambre (50), qui d'une part est utilisé comme réservoir de compensation, qui est relié directement ou indirectement à au moins un alésage de cylindre de frein (16) agencé dans le boîtier de soupape (54), et qui d'autre part sert de volume de braquage d'urgence d'un circuit de direction hydrostatique (46), et dans lequel au moins un conduit de retour (46) du circuit de direction hydrostatique (46) débouche dans la chambre (50) tandis que dans une zone élevée de la chambre (50) est prévue une ouverture de tropplein (88), qui peut être reliée au moyen d'un canal (90) à un réservoir (42) pour liquide hydraulique, **caractérisée par** une épaisseur de paroi essentiellement uniforme et une surface marginale périphérique plane (64), qui limite au moins un évidement en forme de cuvette (66) dans la partie centrale de la paroi intercalaire (52), au moins une ouverture de passage (84) et/ou au moins une ouverture de compensation (86) étant prévues dans la paroi intercalaire, tandis que la chambre (50) est subdivisée par la paroi intercalaire en un réservoir de compensation (30) et un volume de braquage d'urgence (48), et le réservoir de compensation (30) et le volume de braquage d'urgence (48) sont par conséquent reliés entre eux.

14. Paroi intercalaire selon la revendication 13, **caractérisée par** un agencement dissymétrique en coupe transversale tel qu'à partir d'un côté marginal (76) de la paroi intermédiaire (52) descend d'une manière relativement pentue à partir de l'évidement (66) et se prolonge selon une disposition relativement plane par la partie marginale (64) sur le côté marginal opposé.

15. Paroi intercalaire selon la revendication 14, **caractérisée en ce que** l'ouverture de passage et/ou l'ouverture de compensation sont situées dans la partie marginale (64) qui est située sur le côté, qui se termine à plat, de l'évidement (66).

16. Paroi intercalaire selon l'une des revendications 13 à 15, **caractérisée en ce qu'**elle est réalisée en une matière plastique selon le procédé de moulage par injection.
